# EUROPÄISCHE PATENTSCHRIFT

(11) **EP 0 440 629 B1**
(45) Veröffentlichungstag und Bekanntmachung des Hinweises auf die Patenterteilung: **15.09.1993**
(21) Anmeldenummer: 89905670.9
(22) Anmeldetag: 10.05.1989
(51) Int. Cl.: G01N 3/56, B24C 5/00

(54) **PRÜFVORRICHTUNG**
TESTING APPARATUS
DISPOSITIF D'ESSAI

(30) Priorität: 11.05.1988 DE 3816229
(43) Veröffentlichungstag der Anmeldung: 14.08.1991
(73) Patentinhaber: INDUSTRIEANLAGEN-BETRIEBSGESELLSCHAFT M.B.H., D-85521 Ottobrunn (DE)
(72) Erfinder: HÜCK, Manfred, D-8011 Vaterstetten (DE)
(74) Vertreter: Bohnenberger, Johannes, Dr.
(86) Internationale Anmeldenummer: EP8900510
(87) Internationale Veröffentlichungsnummer: WO8911091

(56) Entgegenhaltungen:
- DE-A- 1 073 345
- DE-A- 2 013 693
- DE-C- 512 107
- US-A- 2 176 497
- Transactions of the ASME, series H, Journal of Engineering Materials and Technology, Band 99, Nr. 2, April 1977, J.P. Young et al.: "Particle erosion measurements on metals", Seiten 121-125 siehe Seite 121, Absatz 1: "Introduction"; Abbildung 1

## Beschreibung

Die Erfindung betrifft die Verwendung einer besonderen Vorrichtung als Prüfvorrichtung.

Prüflinge wie Fahrzeuge, Teile hiervon oder andere Bauteile müssen oftmals zur Simulation der Wirkungen von Steinschlag oder Hagelschlag mit entsprechenden Festkörpern beaufschlagt werden.

Zweck dieser Versuche ist es zum einen, den Oberflächenschutz von Prüflingen (Kraftfahrzeubauteilen, wie z.B. Achsfedern, Radhaus oder andere, dem Steinschlag ausgesetzten Fahrzeugteilen) oder die Stabilität des Prüflings selbst (Windschutzscheiben, Sturzhelme, Dachplatten) unter definierten Versuchsbedingungen zu beaufschlagen bzw. zu schädigen, um den Einfluß von Steinschlag-/Hagelschlagschäden auf das Korossionsverhalten oder die Bauteilstabilität untersuchen zu können.

Derzeit werden Steinschlagschäden an Kraftfahrzeugbauteilen durch gezielten Beschuß mit Strahlgut definierter Körnung (in der Regel Stahl-Schrott) simuliert. Das Strahlgut wird dabei durch Preßluft mittels einer Düse auf eine bestimmte durchschnittliche Endgeschwindigkeit beschleunigt. Dieses Verfahren hat den Nachteil, daß die Strahlgutpartikel, je nach Größe und Form sowie ihrer Lage im Luftstrom nach dem Verlassen der Düse eine unterschiedliche, nur statistisch definierbare Geschwindigkeit besitzen. Die Größe der durch die Steinschlagsimulation hervorgerufenen Verletzungen des Oberflächenschutzes hängt jedoch, neben der Partikelgröße-, -form und -menge des Strahlgutes sehr wesentlich von der Aufprallgeschwindigkeit ab. Um aussagekräftige Testreihen durchführen zu können, muß man vergleichbare Verletzungen des Oberflächenschutzes von Prüfling zu Prüfling erhalten. Darum muß die Aufprallgeschwindigkeit aller Strahlgutpartikel möglichst gleich groß und bekannt sein.

Der Erfindung liegt die Aufgabe zugrunde, eine Prüfvorrichtung aufzuzeigen, mit deren Hilfe Steinschläge oder Hagelschläge unter exakt reproduzierbaren Bedingungen simulierbar sind.

Hierzu eignet sich überraschenderweise eine Prüfvorrichtung, wie sie im Prinzip aus der DE-A-10 73 345 oder der US-A-2 176 497 bekannt ist. Diese bekannten Vorrichtungen sollen zum "Sandstrahlen" verwendet werden. Gemäß der US-A-2 176 497 sollen die Walzen entweder eine Metall- oder eine Gummi-Oberfläche aufweisen und werden mittels einer federnden Spannvorrichtung gegeneinander gepreßt. Gemäß der DE-A-10 73 345 ist eine einzige Rolle vorgesehen, während als Gegenhalter ein umlaufendes Band dient. Die Kraft, mit welcher das Band auf die Walze drückt und dadurch die zu beschleunigenden Festkörper ergreift, ist durch federnde Spanneinrichtungen eingestellt.

Bei Verwendung einer solchen Vorrichtung als Prüfvorrichtung zur Beaufschlagung von Prüflingen, z.B. Fahrzeugen, Teilen hiervon oder anderen Bauteilen werden Steine geeigneter Größe auf die Prüflinge geschleudert. Wenn man mit der Prüfvorrichtung die Wirkung von Hagelschlag z.B. auf Fahrzeugkarosserien oder auf Dächer prüfen will, so werden als Festkörper Eiskörner geeigneter Größe verwendet.

Die Geschwindigkeit der ausgeschleuderten Festkörper beim Verlassen der Prüfvorrichtung ist bekannt und eindeutig durch die Umfangsgeschwindigkeit der Walzen definiert.

Die Festkörper werden dann besonders gleichmäßig beschleunigt und können auf besonders hohe Geschwindigkeiten gebracht werden, wenn die Walzen verformbare elastische Außenflächen aufweisen. Hierzu eignen sich sehr gut auf Felgen aufgezogene Hohlreifen mit glatter Außenoberfläche, also sogenannte Slicks. Diese glattflächigen Reifen für Rennfahrzeuge sind für kleinere Vorrichtungen in Form von Go-cart-Slicks erhältlich, mittels denen ohne weiteres eine Beschleunigung der Festkörper auf ca. 200 km/h erzielbar ist. Für größere Vorrichtungen und höhere Geschwindigkeiten (ca. 350 km/h) eignen sich Formel I Reifen.

Die Reifen werden vorteilhafterweise nicht aufgepumpt, um so eine höhere Nachgiebigkeit und damit einen Schutz vor einem Zermahlen der Festkörper zu erzielen. Dadurch, daß sich bei entsprechenden Drehzahlen bzw. Umfangsgeschwindigkeiten die Außenflächen der Reifen nach außen wölben, wird eine umfangsgeschwindigkeitsabhängige Anpreßkraft der Reifen gegeneinander bzw. eine geschwindigkeitsabhängige Mitnahmekraft in bezug auf die zu beschleunigenden Festkörper erzielt.

Vorzugsweise sind die Walzen an einem Maschinengestell befestigt, so daß die Vorrichtung insgesamt transportabel und einrichtbar (in bezug auf den Prüfling) ist. Das Maschinengestell selbst weist vorzugsweise Einrichtungen zum definierten Einstellen des Abstandes zwischen den Walzen auf, so daß Festkörper im wesentlichen beliebiger Durchmesser als Strahlgut verwendet werden können.

Vorzugsweise ist das Maschinengestell mit Einrichtungen zum Einstellen des Auswurfwinkels des Strahlgutes versehen. Dieser Auswurfwinkel streut um die Mittelsenkrechte auf eine Fläche, welche durch die Achsen der Walzen in Länge und Richtung und durch die Breite der Reifen in ihrer Breite definiert ist. Wenn also die Walzen mit horizontal verlaufenden Achsen übereinander angeordnet sind, so ist der vertikale Öffnungswinkel des austretenden Strahlgutes durch die Mitnahmeeigenschaften (Haftung zwischen Strahlgut und Walzenoberfläche) der Walzen vorgegeben.

Das Maschinengestell ist vorteilhafterweise mit Einrichtungen zum Einstellen der Höhe der Walzen relativ zum Aufstellungsort versehen, so daß man den Festkörper-Strahl auf bestimmte Partien eines schwer handhabbaren Prüflings (z.B. Fahrzeugkarosserie) richten kann.

Zum Einrichten der Prüfvorrichtung relativ zum Prüfling ist die Prüfvorrichtung vorteilhafterweise mit Anzeigeeinrichtungen versehen, die relativ zu den Walzen befestigt und einstellbar sind und die Flugbahn der beschleunigten Festkörper anzeigen. Hierzu eignen sich entweder im sichtbaren Bereich abstrahlende Laser oder ähnliche gerichtet strahlende Lichtquellen, die so ausgerichtet sind, daß sie zumindest einige Punkte zur Definierung der Flugbahnumrisse anzeigen. Alternativ ist es möglich, eine Lichtquelle mit nachgeschalteter Optik (Zerstreuungslinse und Blende) vorzusehen, welche eine dem Festkörper-Strahl entsprechende Abstrahlcharakteristik besitzt.

Die Zuführungseinrichtungen, über welche die Festkörper den Walzen zugeführt werden, sind so ausgebildet, daß eine definierte Menge an Festkörpern pro Zeiteinheit den Walzen zuführbar ist. Hierzu eignen sich z.B. motorisch getriebene Schüttelrutschen. Diese sind vorzugsweise mit Klassifizierungseinrichtungen versehen, um mindestens die Maximalgröße der den Walzen zugeführten Festkörper zu begrenzen. Dies ist über einen einfachen Spalt möglich. Selbstverständlich können dem Spalt auch Sieb-Einrichtungen vorgeschaltet sein, über welche zu kleine Festkörper ebenfalls aussortiert werden.

Weitere erfindungsgemäße Merkmale ergeben sich aus den Unteransprüchen sowie der nachfolgenden Beschreibung bevorzugter Ausführungsformen der Erfindung, die im folgenden anhand von Abbildungen näher erläutert werden. Hierbei zeigt:
- Fig. 1: eine schematische Zeichnung einer ersten bevorzugten Ausführungsform der erfindungsgemäßen Vorrichtung in Seitenansicht;
- Fig. 2: eine schematische Darstellung der Anordnung nach Figur 1 in einer hierzu senkrechten Seitenansicht;
- Fig. 3: einen Längsschnitt durch eine weitere bevorzugte Ausführungsform der erfindungsgemäßen Vorrichtung; und
- Fig. 4: einen Schnitt entlang der Linie IV-IV aus Figur 3.

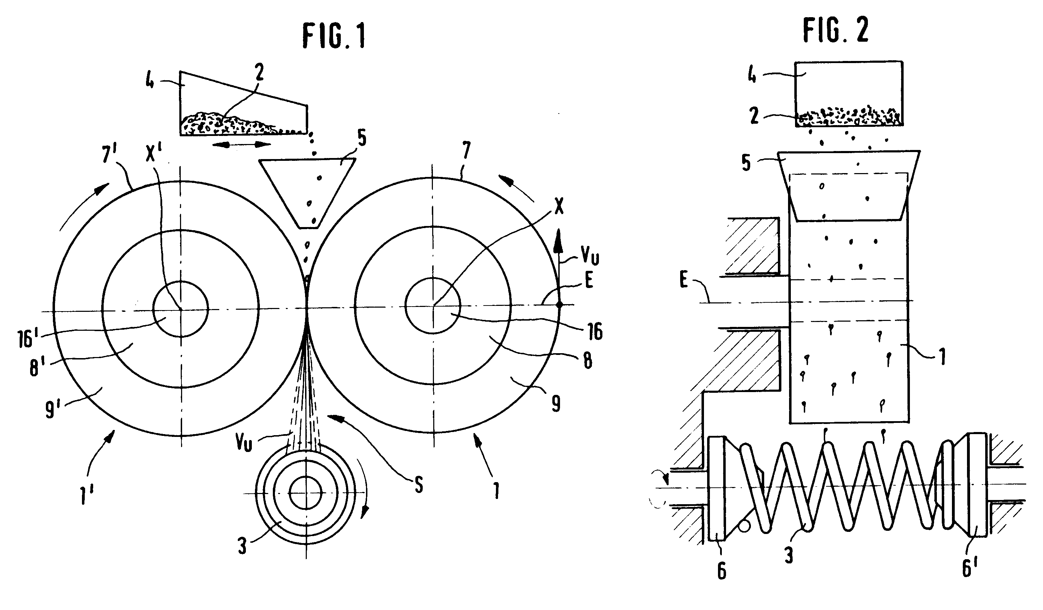

Im folgenden wird eine erste bevorzugte Ausführungsform der erfindungsgemäßen Prüfvorrichtung anhand der Figuren 1 und 2 näher beschrieben. Diese Vorrichtung ist insbesondere zur Beaufschlagung von kleineren Prüflingen geeignet. Bei dieser Vorrichtung sind zwei Walzen 1, 1' vorgesehen, deren Drehachsen X bzw. X' parallel zueinander verlaufen und in einer Horizontalebene E liegen. Die Walzen 1, 1' weisen jeweils eine Welle 16, 16' auf, auf welcher eine Felge 8, 8' mit aufgezogenem Gummimantel 9, 9' sitzt. Eine der Achsen 1 oder 1' ist über einen nicht gezeigten Elektromotor mit einstellbarer Geschwindigkeit antreibbar.

Die Walzen 1, 1' sind soweit voneinander beabstandet, daß die Außenflächen 7, 7' der Mäntel 9, 9' sich zumindest dann berühren, wenn die Walzen 1, 1' sich mit einer Drehzahl drehen, die zur Erzielung einer geeigneten Strahlgeschwindigkeit Vu hinreichend ist, mit welcher die einzelnen, ein Strahlgut 2 definierenden Festkörper auf einen Prüfling 3 geschleudert werden sollen. Diese Geschwindigkeit Vu entspricht der Umfangsgeschwindigkeit der Walzen 1, 1', welche in Figur 1 mit einem nach oben gerichteten Pfeil verdeutlicht ist.

Über den Walzen 1, 1' ist ein Trichter 5 so angeordnet, daß seine Auslaßöffnung exakt über dem Berührungsspalt zwischen den Walzen 1, 1' liegt.

Über dem Trichter 5 mündet eine Schüttelrutsche 4 mit ihrem Auslaß, in welcher sich eine Vorratsmenge von Strahlgut 2 befindet. Die Bewegung der Schüttelrutsche 4 ist mit einem Doppelpfeil in Figur 1 gezeichnet und wird über einen Schüttelmotor (nicht gezeigt) mit konstanter Amplitude und Frequenz bewirkt, so daß eine konstante Menge an Strahlgut 2 pro Zeiteinheit in den Trichter 5 und aus diesem zwischen die Walzen 1, 1' einführbar ist. Bei Drehung der Walzen 1, 1' in der in Figur 1 gezeigten Pfeilrichtung werden die zwischen die Walzen 1, 1' gelangenden Festkörper von den Außenumfangsflächen 7, 7' ergriffen und auf die der Walzendrehzahl bzw. der Walzenumfangsgeschwindigkeit Vu entsprechende Geschwindigkeit beschleunigt. Somit tritt zwischen den Walzen ein Strahlgut-Strahl S aus.

Im Bereich des Strahlgut-Strahles S ist der Prüfling 3 angeordnet. Im gezeigten Ausführungsbeispiel ist dieser Prüfling 3 eine Kfz-Schraubenfeder. Diese Schraubenfeder ist zwischen zwei Einspanneinrichtungen 6, 6' gehalten, die drehbar gelagert sind und von einem (nicht gezeigten) Elektromotor mit konstanter Geschwindigkeit angetrieben werden, so daß sich der Prüfling 3 im Strahlgut-Strahl S dreht und von allen Seiten beschossen wird.

Als Strahlgut werden vorzugsweise Steine mit einer Körnung verwendet, wie sie im Normalbetrieb auftreten. Für die Prüfung von üblichen Straßenfahrzeugen bzw. deren Bauteilen eignet sich somit z.B. im Straßenbau häufig verwendeter Rollsplitt. Will man Geländefahrzeuge oder Baufahrzeuge unter wirklichkeitsnahen Bedingungen testen, so müssen entsprechend größere Steine verwendet werden. Selbstverständlich ist es auch möglich, Strahlgut zu verwenden, wie es zum Kugelstrahlen üblich ist. In diesem Fall ist dann die Vorrichtung auch zum Kugelstrahlen geeignet.

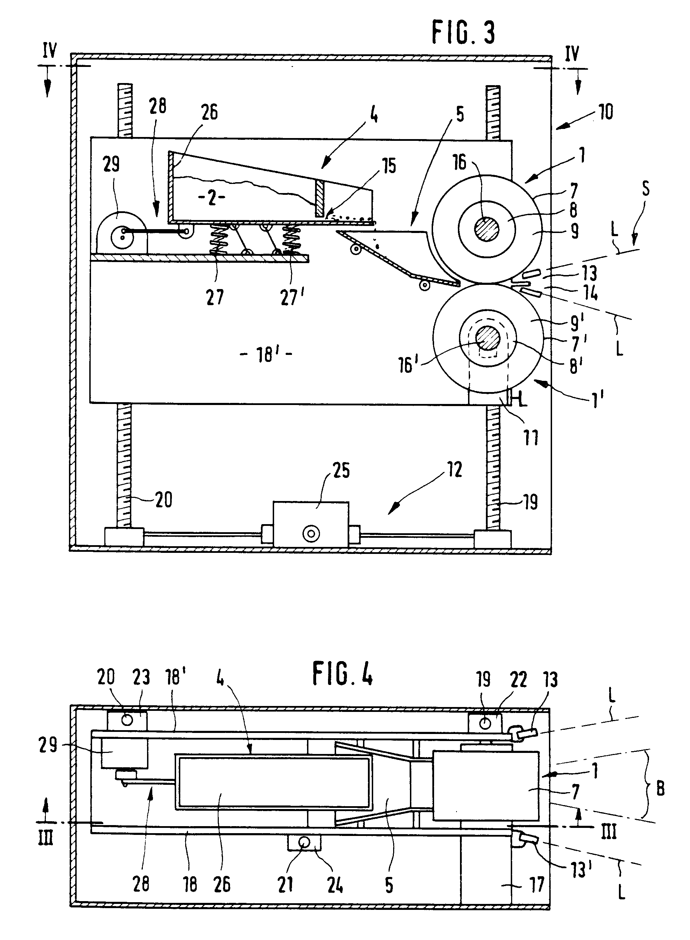

Im folgenden wird eine andere bevorzugte Ausführungsform der Erfindung anhand der Figuren 3 und 4 näher beschrieben, wobei dieselben Bezugsziffern gleiche oder gleich wirkende Teile bezeichnen.

Bei der in den Figuren 3 und 4 gezeigten Ausführungsform sind die beiden Walzen 1, 1' übereinander angeordnet, so daß der Strahlgut-Strahl S horizontal austritt.

Die Prüfvorrichtung umfaßt ein Maschinengestell 10, in welchem Rahmenflächen 18, 18' verstellbar gelagert sind. Diese Lagerung wird über drei Spindeln 19-21 erzielt, welche einerseits am Maschinengestell 10 drehbar befestigt sind und andererseits durch an den Rahmenflächen 18, 18' befestigte Halteteile 22-24 mit entsprechenden Innengewinden laufen.

Die Spindeln 19-24 sind mittels eines Spindelantriebs 25 drehbar, mit dem zusammen sie eine Einrichtung zur Höhen- und Winkeleinstellung bilden. Insbesondere wird dies dadurch erreicht, daß man zur reinen Höhenverstellung alle Spindeln mit derselben Geschwindigkeit dreht und zur Verstellung der Neigung (Winkel in der Vertikalen) bei Stillstand der mittleren Spindel 21 die vordere und die hintere Spindel 19 bzw. 20 gegenläufig zueinander dreht. Die in den Figuren 3 und 4 gezeigte Anordnung ist selbstverständlich nur als prinzipielle Modellösung zu sehen, mit der verdeutlicht werden soll, daß die bevorzugte Ausführungsform der Erfindung eine derartige Einstellung des Strahlgut-Strahles S ermöglicht.

In der in Figur 3 und 4 gezeigten Ausführungsform wird die obere Walze 1 über einen Elektromotor 17 mit konstanter Geschwindigkeit angetrieben. Ab einer gewissen Drehzahl kommt dann die Außenumfangsfläche 7 der oberen Walze 1 mit der Außenumfangsfläche 7' der unteren Walze 1' in Berührung und nimmt diese mit, so daß sich dann beide Walzen 1, 1' mit derselben Drehzahl drehen.

Die untere Walze 1' ist an den Rahmenflächen 18, 18' in Richtung auf die obere Walze 1 verschiebbar angeordnet. Hierzu dient eine Einrichtung 11 zur Verstellung des Abstandes der Walzen 1, 1' zueinander, so daß der Abstand der Walzen entsprechend den Durchmessern der einzelnen Festkörper, die das Strahlgut 2 bilden, einstellbar ist.

Die Zuführung von Strahlgut 2 zu den Walzen 1, 1' geschieht über eine Schüttelrutsche 4, die eine Wanne 26 umfaßt, welche auf Federn 27, 27' relativ zu den Rahmenflächen 18, 18' befestigt ist. Die Wanne 26 steht über einen Kurbeltrieb 28 mit einem Elektromotor 29 in Verbindung, bei dessen Drehung die Wanne 26 in der mit einem Doppelpfeil gezeigten Richtung bewegt wird.

An ihrem, den Walzen 1, 1' zugewandten Ende weist die Wanne 26 an ihrem Boden einen Spalt 15 auf, durch welchen Strahlgut 2 austreten kann. Die Höhe des Spaltes 15 begrenzt den maximalen Durchmesser des ausgeschüttelten Strahlgutes.

Das aus der Wanne 27 herausgeschüttelte Strahlgut fällt nach unten in einen Trichter 5, über welchen es in den Bereich zwischen den Walzen 1, 1' bzw. deren Außenumfangsflächen 7, 7' rutscht. Sobald des austretende und herunterrutschende Strahlgut zwischen die Außenumfangsflächen 7, 7' gelangt, wird es im wesentlichen auf deren Umfangsgeschwindigkeit, also nur mit einer geringen Geschwindigkeitsabweichung beschleunigt und tritt als Strahlgut-Strahl S aus der Vorrichtung aus.

Um ein Einrichten der Prüfvorrichtung relativ zum Prüfling noch im Stillstand der Vorrichtung vornehmen zu können, ist die in den Figuren 3 und 4 gezeigte Vorrichtung mit insgesamt vier Lasern 13, 13' und 14, 14' neben den Walzen 1, 1' aber in Höhe deren Berührungsflächen versehen. Die Laser 13-14' sind hierbei so angeordnet, daß vier, den Umriß des Strahlgut-Strahles S bezeichnende Strahlen L einstellbar sind.

Bei einer alternativen Ausführungsform der Erfindung ist eine einzige Lichtquelle mit einer entsprechenden Optik vorgesehen, die ein einziges, dem Strahlgut-Strahl S nachgeformtes Lichtbündel B (Figur 4) in Richtung des Strahlgut-Strahles S aussendet.

## Patentansprüche

1. Verwendung einer Vorrichtung als Prüfvorrichtung zur Beaufschlagung von Prüflingen (3) wie Fahrzeugen, Teilen hiervon oder anderen Bauteilen mit relativ zum Prüfling (3) sich bewegenden Festkörpern (2) zur Simulation von Steinschlägen oder Hagelschlägen unter exakt reproduzierbaren Bedingungen, wobei die Vorrichtung zwei Walzen (1, 1') umfaßt, von denen mindestens eine (1) antreibbar ist und die achsparallel zueinander angeordnet sind, so daß bei Drehung der Walzen (1, 1') zwischen die Walzen eingeführte Festkörper (2) beschleunigt werden und auf den Prüfling (3) schleuderbar sind.

2. Verwendung einer Vorrichtung als Prüfvorrichtung nach Anspruch 1,
**dadurch gekennzeichnet**,
daß die Walzen (1, 1') verformbare elastische Außenumfangsflächen (7, 7') aufweisen.

3. Verwendung einer Vorrichtung als Prüfvorrichtung nach Anspruch 2,
**dadurch gekennzeichnet**,
daß die Walzen (1, 1') Felgen (8, 8') mit aufgezogenen hohlen Reifen (9, 9') umfassen.

4. Verwendung einer Vorrichtung als Prüfvorrichtung nach einem der Ansprüche 2 oder 3,
**dadurch gekennzeichnet**,
daß die Außenumfangsflächen (7, 7') der Walzen (1, 1') im wesentlichen glattflächig sind.

5. Verwendung einer Vorrichtung als Prüfvorrichtung nach einem der vorhergehenden Ansprüche,
**dadurch gekennzeichnet**,
daß die Walzen (1, 1') an einem Maschinengestell (10) befestigt sind, das Einrichtungen (11) zum definierten Einstellen des Abstands zwischen den Walzen (1, 1') aufweist.

6. Verwendung einer Vorrichtung als Prüfvorrichtung nach einem der vorhergehenden Ansprüche,
**gekennzeichnet durch**
Einrichtungen (12) zum Einstellen des Winkels der durch Achsen beider Walzen (1, 1') verlaufenden Ebene zur Vertikalrichtung.

7. Verwendung einer Vorrichtung als Prüfvorrichtung nach einem der vorhergehenden Ansprüche,
**gekennzeichnet durch**
Einrichtungen (12) zum Einstellen der Höhe der Walzen (1, 1') relativ zu einer Standfläche.

8. Verwendung einer Vorrichtung als Prüfvorrichtung nach einem der vorhergehenden Ansprüche,
**gekennzeichnet durch**
Anzeigeeinrichtungen (13, 13', 14, 14'), die relativ zu den Walzen (1, 1') befestigt und einstellbar sind, zum Anzeigen der Flugbahnbereiche der beschleunigten Festkörper (2).

9. Verwendung einer Vorrichtung als Prüfvorrichtung nach Anspruch 8,
**dadurch gekennzeichnet**,
daß die Anzeigeeinrichtungen im sichtbaren Bereich abstrahlende Laser (13, 13'; 14, 14') oder dergleichen gerichtet strahlende Lichtquellen zur Anzeige der Flugbereichsumrisse umfassen.

10. Verwendung einer Vorrichtung als Prüfvorrichtung nach Anspruch 8,
**dadurch gekennzeichnet,**
daß die Anzeigeeinrichtungen eine Lichtquelle mit einer im Winkelbereich einstellbaren Zerstreuungsoptik zur Anzeige der Flugbahnbereiche umfassen.

11. Verwendung einer Vorrichtung als Prüfvorrichtung nach einem der vorhergehenden Ansprüche,
**gekennzeichnet durch**
Zuführungseinrichtungen (4, 5), über welche die Festkörper (2) in definierter Menge/Zeiteinheit zu den Walzen (1, 1') zuführbar sind.

12. Verwendung einer Vorrichtung als Prüfvorrichtung nach Anspruch 11,
**dadurch gekennzeichnet**,
daß die Zuführungseinrichtungen (4, 5) Klassifizierungseinrichtungen (15) zur Einstellung mindestens der Maximalgröße der den Walzen (1, 1') zugeführten Festkörper (2) aufweisen.

## Claims

1. The use of an apparatus as a testing apparatus for subjecting test pieces (3) such as vehicles, parts thereof or other components to impinging solid bodies (2) which move relative to the test piece (3) so as to simulate falling rocks or hailstones under exactly reproducible conditions, said apparatus comprising two barrels (1, 1') at least one (1) of which is adapted to be driven and which are disposed in axially parallel relationship so that upon rotation of said barrels (1, 1') any solid bodies (2) introduced between the barrels are accelerated and may be flung onto the test piece (3).

2. The use of an apparatus as a testing apparatus in accordance with claim 1,
characterised in that said barrels (1, 1') comprise deformable elastic outer peripheral surfaces (7, 7').

3. The use of an apparatus as a testing apparatus according to claim 2,
characterised in that said barrels (1, 1') comprise rims (8, 8') with hollow tyres (9, 9') mounted thereon.

4. The use of an apparatus as a testing apparatus according to any one of the claims 2 or 3,
characterised in that the outer peripheral surfaces (7, 7') of said barrels (1, 1') are substantially smooth surfaces.

5. The use of an apparatus as a testing apparatus according to any one of the preceding claims,
characterised in that said barrels (1, 1') are mounted on a machine frame (10) which comprises means (11) for a defined adjustment of the spacing between said barrels (1, 1').

6. The use of an apparatus as a testing apparatus according to any one of the preceding claims,
characterised by means (12) for adjusting the angle of the plane extending through the axes of both barrels (1, 1') relative to the vertical.

7. The use of an apparatus as a testing apparatus according to any one of the preceding claims,
characterised by means (12) for adjusting the level of said barrels (1, 1') relative to a floor space.

8. The use of an apparatus as a testing apparatus according to any one of the preceding claims,
characterised by indicating means (13, 13', 14, 14') which are mounted and adjustable relative to said barrels (1, 1') for indicating the flight-path areas of the accelerated solid bodies (2).

9. The use of an apparatus as a testing apparatus according to claim 8,
characterised in that said indicating means comprise lasers (13, 13'; 14, 14') for emission in the visible range or similar light sources emitting directional radiation for indicating the contours of the flying range.

10. The use of an apparatus as a testing apparatus according to claim 8,
characterised in that said indicating means comprise a light source including an angularly adjustable optical dispersing system for indicating the flight-path areas.

11. The use of an apparatus as a testing apparatus according to any one of the preceding claims,
characterised by feeding means (4, 5) through which the solid bodies (2) may be fed to said barrels (1, 1') in a defined quantity per unit of time.

12. The use of an apparatus as a testing apparatus as claimed in claim 11,
characterised in that said feeding means (4, 5) comprise classifying means (15) for adjusting at least the maximum size of the solid bodies (2) fed to said barrels (1, 1').

## Revendications

1. Utilisation d'un appareil comme appareil d'essais pour le frappement d'objets à essayer (3) tels que véhicules, pièces de ceux-ci ou autres éléments de construction avec des corps solides (2) se mouvant par rapport à l'objet à essayer (3) pour la simulation de chocs de pierres ou de chutes de grêle dans des conditions exactement reproductibles, l'appareil comprenant deux cylindres (1, 1') dont au moins un (1) peut être entraîné et qui sont placés leurs axes parallèles, de sorte que lorsque les cylindres (1, 1') tournent, des corps solides (2) introduits entre eux sont accélérés et peuvent être projetés sur l'objet à essayer (3).

2. Utilisation d'un appareil comme appareil d'essais selon la revendication 1, caractérisée par le fait que les cylindres (1, 1') présentent des surfaces périphériques extérieures élastiques déformables (7, 7').

3. Utilisation d'un appareil comme appareil d'essais selon la revendication 2, caractérisée par le fait que les cylindres (1, 1') comprennent des jantes (8, 8') sur lesquelles sont montés des bandages creux (9, 9').

4. Utilisation d'un appareil comme appareil d'essais selon l'une des revendications 2 et 3, caractérisée par le fait que les surfaces périphériques extérieures (7, 7') des cylindres (1, 1' ) sont pratiquement lisses.

5. Utilisation d'un appareil comme appareil d'essais selon l'une des revendications précédentes, caractérisée par le fait que les cylindres (1, 1') sont fixés à un bâti (10) qui présente des moyens (11) pour le réglage défini de la distance entre les cylindres (1, 1').

6. Utilisation d'un appareil comme appareil d'essais selon l'une des revendications précédentes, caractérisée par des moyens (12) pour le réglage de l'angle que le plan passant par les axes des deux cylindres (1, 1') fait avec la direction verticale.

7. Utilisation d'un appareil comme appareil d'essais selon l'une des revendications précédentes, caractérisée par des moyens (12) pour le réglage de la hauteur des cylindres (1, 1') par rapport à une assise.

8. Utilisation d'un appareil comme appareil d'essais selon l'une des revendications précédentes, caractérisée par des moyens indicateurs (13, 13', 14, 14') fixés et réglables par rapport aux cylindres (1, 1') pour l'indication des champs de trajectoires des corps solides (2) accélérés.

9. Utilisation d'un appareil comme appareil d'essais selon la revendication 8, caractérisée par le fait que les moyens indicateurs comprennent des lasers (13, 13', 14, 14') émettant dans le visible ou des sources lumineuses rayonnant dans des directions semblables pour l'indication des contours des champs de projection.

10. Utilisation d'un appareil comme appareil d'essais selon la revendication 8, caractérisée par le fait que les moyens indicateurs comprennent une source lumineuse comportant un système optique divergent à champ angulaire réglable pour l'indication des champs de trajectoires.

11. Utilisation d'un appareil comme appareil d'essais selon l'une des revendications précédentes, caractérisée par des moyens (4, 5) pour l'amenée des corps solides (2) aux cylindres (1, 1') en quantité par unité de temps définie.

12. Utilisation d'un appareil comme appareil d'essais selon la revendication 11, caractérisée par le fait que les moyens d'amenée (4, 5) présentent des moyens de classement (15) pour le réglage au moins de la grosseur maximale des corps solides (2) amenés aux cylindres (1, 1').
